# EUROPEAN PATENT SPECIFICATION

(11) **EP 3 020 958 B1**
(45) Date of publication and mention of the grant of the patent: **30.12.2020**
(21) Application number: 15194915.3
(22) Date of filing: 17.11.2015
(51) Int. Cl.: F03D 1/06

(54) **SPAR CAP FOR A WIND TURBINE ROTOR BLADE**
HOLMKAPPE FÜR EIN WINDTURBINENROTORBLATT
EMBOUT DE LONGERON POUR PALE DE ROTOR D'ÉOLIENNE

(30) Priority: 17.11.2014 US 201414542850
(43) Date of publication of application: 18.05.2016
(73) Proprietor: General Electric Company, Schenectady, NY 12345 (US)
(72) Inventor: CARUSO, Christopher Daniel, Greenville, SC South Carolina 29615 (US); YARBROUGH, Aaron A., Greenville, SC South Carolina 29615 (US); HARDISON, Richard Allen, Greenville, SC South Carolina 29615 (US)
(74) Representative: ZBM Patents - Zea, Barlocci & Markvardsen

(56) References cited:
- EP-A1- 0 580 417
- EP-A1- 1 830 063
- US-A1- 2007 074 892
- US-A1- 2011 189 025
- US-A1- 2013 149 153

## Description

The present subject matter relates generally to rotor blades for a wind turbine and, more particularly, to a spar cap for a rotor blade having conductive layers.

Wind power is considered one of the cleanest, most environmentally friendly energy sources presently available, and wind turbines have gained increased attention in this regard. A modern wind turbine typically includes a tower, generator, gearbox, nacelle, and one or more rotor blades. The rotor blades capture kinetic energy from wind using known foil principles and transmit the kinetic energy through rotational energy to turn a shaft coupling the rotor blades to a gearbox, or if a gearbox is not used, directly to the generator. The generator then converts the mechanical energy to electrical energy that may be deployed to a utility grid.

Wind turbine rotor blades generally include a body shell formed by two shell halves of a composite laminate material. The shell halves are generally manufactured using molding processes and then coupled together along the corresponding edges of the rotor blade. In general, the body shell is relatively lightweight and has structural properties (e.g., stiffness, buckling resistance and strength) which are not configured to withstand the bending moments and other loads exerted on the rotor bade during operation. To increase the stiffness, buckling resistance and strength of the rotor blade, the body shell is typically reinforced using spar caps that engage the inner surfaces of the shell halves. The spar caps may be constructed of various materials, including but not limited to glass fiber laminate composites and/or carbon fiber laminate composites.

During the life of the wind turbine, the rotor blades are particularly prone to lightning strikes. Thus, modern wind turbines typically include a lightning protection system having one or more lightning receptors disposed on the exterior of the rotor blades and a lightning conductor or cable wire coupled to the lightning receptor(s) and extending through the rotor blades from a blade tip to a blade root and through other components until grounded down through the tower to a ground location. See, for example, US 2007/0074892, EP 1 830 063 and US 2011/0189025.

Accordingly, when lightning strikes the rotor blade, the electrical current may flow through the lightning receptor(s) and may be conducted through the lightning system to the ground. However, when a lightning strike occurs, unwanted discharges may arise from the spar caps to the body shell, which may cause significant damage to the rotor blade.

Accordingly, there is a need for a spar cap design that prevents such unwanted discharges from the spar caps. More specifically, a spar cap constructed with alternating layers of conductive material so as to electrically connect the layers of the spar cap to the lightning protection system would be welcomed in the art.

Various aspects and advantages of the invention will be set forth in part in the following description, or may be clear from the description, or may be learned through practice of the invention.

The present invention is defined by the appended claims.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 illustrates a perspective view of one embodiment of a wind turbine according to the present disclosure;
FIG. 2 illustrates a perspective view of another embodiment of a wind turbine, particularly illustrating a lighting protection system configured therewith according to the present disclosure;
FIG. 3 illustrates a perspective view of a rotor blade according to the present disclosure;
FIG. 4 illustrates a cross-sectional view of the rotor blade of FIG. 3 along line 4-4;
FIG. 5 illustrates a detailed view of the spar cap of FIG. 4;
FIG. 6 illustrates a side view of one embodiment of a spar cap along a length thereof according to the present disclosure;
FIG. 7 illustrates another detailed view of one embodiment of a spar cap according to the present disclosure;
FIG. 8 illustrates a cross-sectional view of the spar cap of FIG. 5 along line 8-8; and
FIG. 9 illustrates a cross-sectional view of another embodiment of a spar cap according to the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

Generally, the present subject matter is directed to a spar cap of a rotor blade of a wind turbine having one or more conductive layers. More specifically, the spar cap includes one or more layers of a first material and one or more layers of a second conductive material that contacts at least one of the layers of first material. Further, the conductive material is different than the first material. The conductive material is configured with the first material so as to create an equipotential spar cap. As used herein, the term "equipotential" or "equipotentially" or similar generally refers to an object where every point in the object is at the same potential. For example, if certain points within or at the surface of the spar cap contain no flow of charge between the points, then the potential difference between the points is zero. In such an illustration, the spar cap would be equipotential, as all points in the spar cap have the same potential.

The present disclosure provides many advantages not present in the prior art. For example, if the first material contains carbon, the spar caps can be very anisotropic without the addition of the conductive material. By including the conductive material, the resulting conductivity of the carbon spar caps is more isotropic, allowing current transfer through the thickness and transverse to the fibers. Thus, the spar caps of the present disclosure help reduce undesired discharges or arcs from the carbon spar caps to the blade which would otherwise cause significant damage, e.g. debonding between the layers.

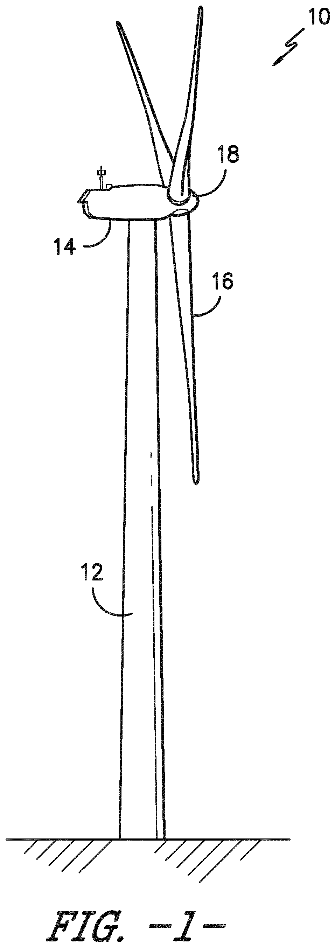

Referring now to the drawings, FIG. 1 illustrates a perspective view of a horizontal axis wind turbine 10. It should be appreciated that the wind turbine 10 may also be a vertical-axis wind turbine. As shown in the illustrated embodiment, the wind turbine 10 includes a tower 12, a nacelle 14 mounted on the tower 12, and a rotor hub 18 that is coupled to the nacelle 14. The tower 12 may be fabricated from tubular steel or other suitable material. The rotor hub 18 includes one or more rotor blades 16 coupled to and extending radially outward from the hub 18. As shown, the rotor hub 18 includes three rotor blades 16. However, in an alternative embodiment, the rotor hub 18 may include more or less than three rotor blades 16. The rotor blades 16 rotate the rotor hub 18 to enable kinetic energy to be transferred from the wind into usable mechanical energy, and subsequently, electrical energy. Specifically, the hub 18 may be rotatably coupled to an electric generator (not illustrated) positioned within the nacelle 14 for production of electrical energy.

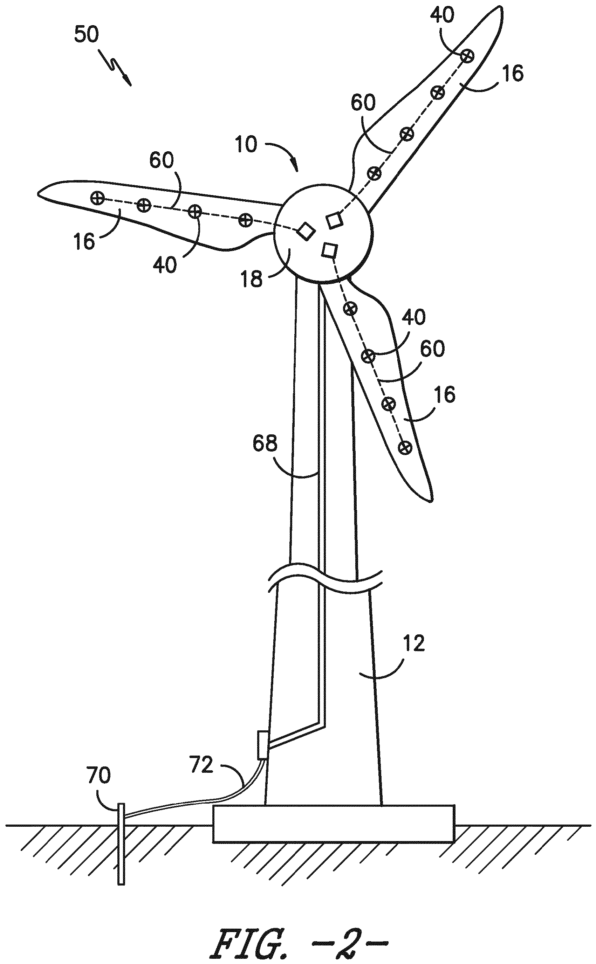

Referring to FIG. 2, a perspective view of one embodiment of a wind turbine 10 having a lightning protection system 50 configured thereon is illustrated. As shown, the lightning protection system 50 includes at least one rotor blade 16 having a plurality of lightning receptors 40 configured thereon. Further, each of the rotor blades 16 may be configured in a similar manner. For example, as shown, each rotor blade 16 includes a conductive circuit 60 having a plurality of lightning receptors 40 connected via one or more lightning conductors 41 within an internal cavity of the rotor blade 16. The respective lightning conductive circuits 60 for each of the rotor blades 16 include terminal ends that extend through the root portion of the rotor blades 16 and are individually connected to a grounding system within the rotor hub 18. The grounding system may be variously configured, as is well known in the art. For example, the grounding system may include any conductive path defined by the wind turbine's machinery or support structure, including blade bearings, machinery bed plates, tower structure, and the like, that defines any suitable ground conductive path 68 from the blades 16, through the tower 12, to a ground rod 70 via a ground cable 72, or other suitable electrical ground path.

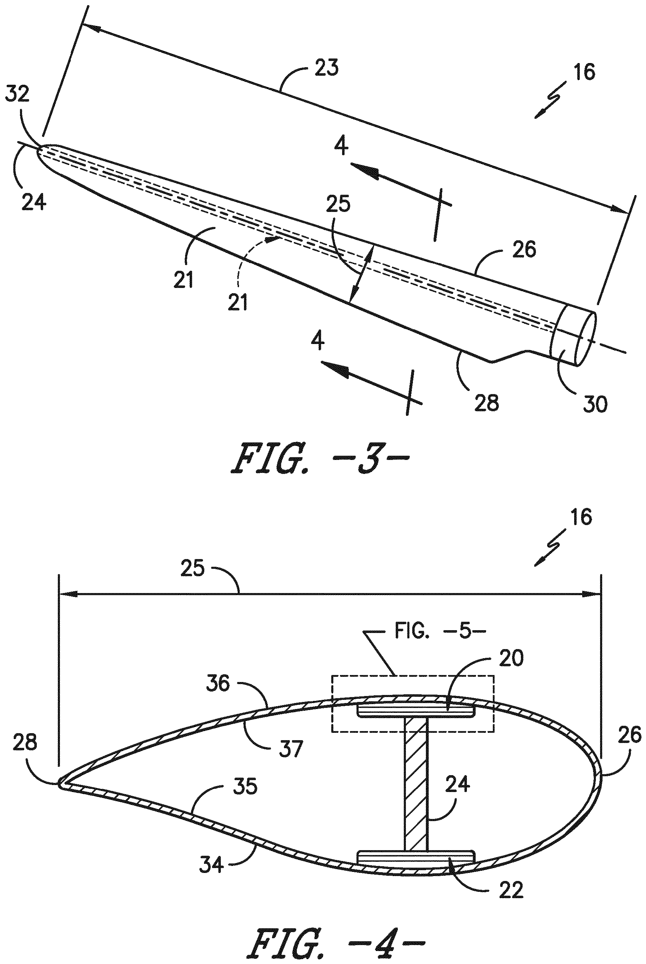

Referring now to FIGS. 3 and 4, one of the rotor blades 16 of FIG. 2 is illustrated in accordance with aspects of the present subject matter. In particular, FIG. 3 illustrates a perspective view of the rotor blade 16, whereas FIG. 4 illustrates a cross-sectional view of the rotor blade 16 along the sectional line 4-4 shown in FIG. 3. As shown, the rotor blade 16 generally includes a blade root 30 configured to be mounted or otherwise secured to the hub 18 (FIG. 1) of the wind turbine 10 and a blade tip 32 disposed opposite the blade root 30. A body shell 21 of the rotor blade generally extends between the blade root 30 and the blade tip 32 along a longitudinal axis 27. The body shell 21 may generally serve as the outer casing/covering of the rotor blade 16 and may define a substantially aerodynamic profile, such as by defining a symmetrical or cambered airfoil-shaped cross-section. The body shell 21 may also define a pressure side 34 and a suction side 36 extending between leading and trailing edges 26, 28 of the rotor blade 16. Further, the rotor blade 16 may also have a span 23 defining the total length between the blade root 30 and the blade tip 32 and a chord 25 defining the total length between the leading edge 26 and the trialing edge 28. As is generally understood, the chord 25 may generally vary in length with respect to the span 23 as the rotor blade 16 extends from the blade root 30 to the blade tip 32.

In several embodiments, the body shell 21 of the rotor blade 16 may be formed as a single, unitary component. Alternatively, the body shell 21 may be formed from a plurality of shell components. For example, the body shell 21 may be manufactured from a first shell half generally defining the pressure side 34 of the rotor blade 16 and a second shell half generally defining the suction side 36 of the rotor blade 16, with such shell halves being secured to one another at the leading and trailing edges 26, 28 of the blade 16. Additionally, the body shell 21 may generally be formed from any suitable material. For instance, in one embodiment, the body shell 21 may be formed entirely from a laminate composite material, such as a carbon fiber reinforced laminate composite or a glass fiber reinforced laminate composite. Alternatively, one or more portions of the body shell 21 may be configured as a layered construction and may include a core material, formed from a lightweight material such as wood (e.g., balsa), foam (e.g., extruded polystyrene foam) or a combination of such materials, disposed between layers of laminate composite material.

Referring particularly to FIG. 4, the rotor blade 16 may also include one or more longitudinally extending structural components configured to provide increased stiffness, buckling resistance and/or strength to the rotor blade 16. For example, the rotor blade 16 may include a pair of longitudinally extending spar caps 20, 22 configured to be engaged against the opposing inner surfaces 35, 37 of the pressure and suction sides 34, 36 of the rotor blade 16, respectively. Additionally, one or more shear webs 24 may be disposed between the spar caps 20, 22 so as to form a beam-like configuration. The spar caps 20, 22 may generally be designed to control the bending stresses and/or other loads acting on the rotor blade 16 in a generally spanwise direction (a direction parallel to the span 23 of the rotor blade 16) during operation of a wind turbine 10. Similarly, the spar caps 20, 22 may also be designed to withstand the spanwise compression occurring during operation of the wind turbine 10.

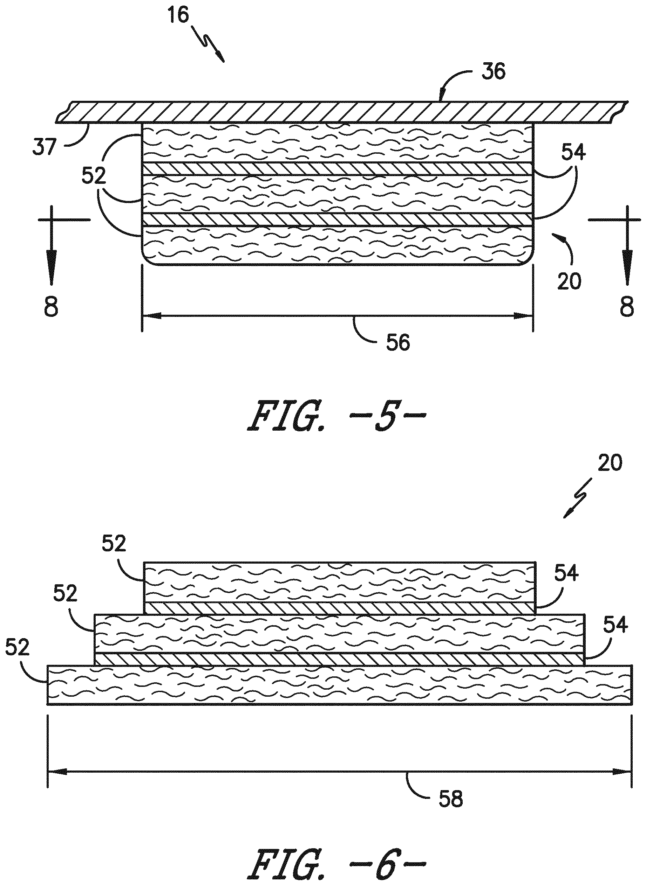

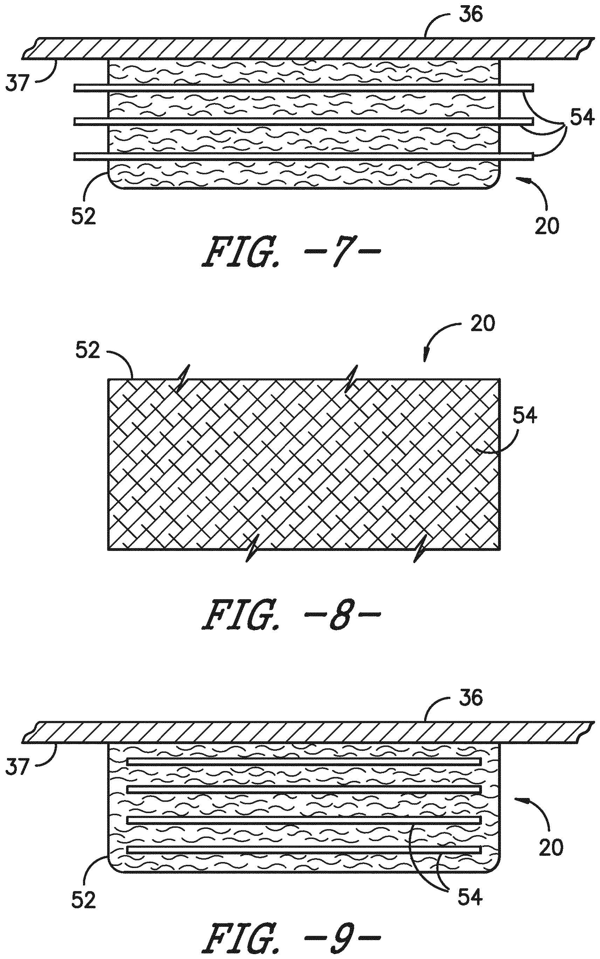

In general, as shown in FIGS. 5-9, the spar caps 20, 22 includes more than one layers 52 of a first material and at least one conductive material 54 contacting at least one of the layers 52 of the first material. More specifically, FIG. 5 illustrates a detailed cross-sectional view of the suction side 36 of the spar cap 20 of FIG. 4 along the spar width 56, whereas FIG. 6 illustrates the spar cap 20 along a spar length 58 (i.e. along the span 23 of the rotor blade 16). FIGS. 7-9 illustrate various embodiments of the conductive material 54 of the spar cap 20 according to the present disclosure.

The first material 52 of the spar caps 20, 22 may be formed from any suitable composite material that has material properties (e.g., strengths and/or moduli of elasticity). Additionally, the spar caps 20, 22 may generally be formed from the same composite material 52. Thus, in several embodiments of the present subject matter, both spar caps 20, 22 may be formed from any suitable laminate composite material which has a tensile strength and/or modulus of elasticity that varies from the composite's compressive strength and/or modulus of elasticity. Suitable laminate composite materials may include laminate composites reinforced with carbon, mixtures of carbon, fiberglass, mixtures of fiberglass, mixtures of carbon and fiberglass and any other suitable reinforcement material and mixtures thereof. For example, in a particular embodiment of the present subject matter, both spar caps 20, 22 may be formed from a carbon fiber reinforced laminate composite.

The conductive material 54 is a different material than the layers of first material 52 and may be any appropriate conductive material that is suitable for preventing unwanted discharges or arcs from the spar caps 20, 22 to the rotor blade 16 which would otherwise cause significant structural damage. For example, in certain embodiments, the conductive material 54 may include a metal or metal alloy, such as copper, aluminum, steel, tin, tungsten, iron, nickel, or combinations thereof. By including the conductive layers 54, the resulting conductivity of the spar caps 20, 22 is more isotropic, allowing current transfer through the thickness of the spar caps 20, 22 and transverse to the fibers.

It should be understood that the spar cap 20 may include any number and/or configuration of layers of first material 52 and conductive layers 54. For example, as shown, the spar cap 20 includes three layers of first material 52 and two layers of conductive material 54. In additional embodiments, the spar cap 20 may include more than three or less than three layers of first material 52 or more than two layers of conductive material 54. Further, as shown, the spar caps 20, 22 may include alternating layers of the first material 52 and the conductive material 54. Alternatively, the conductive material 54 may be absent between or within some layers of first material 52 (e.g. between every other layer or every third layer, etc.). Further, the conductive material 54 may include layers of material (e.g. plies), a mesh, a wire, or any other suitable configuration. In addition, the conductive material 54 can be implemented along the entire span 23 of the rotor blade 16, segmented patches along the span 23, or some percentage of the span 23. Thus, the number of layers and/or configuration of the conductive material 54 is configured to electrically connect the layers 52 of the first material of the spar cap 20 to a lightning protection system 50 of the wind turbine 10 (e.g. via the lightning conductor 41).

Referring particularly to FIGS. 5, 7, and 9, the conductive material 54 can be the same width as spar cap 20, narrower than the spar cap 20, or wider than the spar cap 20. More specifically, as shown in FIG. 5, the conductive material 54 may be substantially the same width as the width 56 of the spar cap 20. In contrast, as shown in FIG. 7, the conductive material 54 may be wider than the width 56 of the spar cap 20 (e.g. when the conductive material 54 contains one or more wires). Further, as shown in FIG. 9, the conductive material 54 may be narrower than the width 56 of the spar cap 20 (e.g. when the conductive material 54 is embedded within the first material 52). In still further embodiments, as shown in FIG. 6, the layers of the first material 52 and the conductive material 54 may include varying lengths along a length 58 of the spar cap 20.

In addition, the width of the conductive material 54 may be a function of the manufacturing method used to construct the spar cap. For example, as shown in FIG. 9, the conductive material 54 may be embedded within the first material 52 due to placing the conductive material 54 within a mold and/or forming conductive layers into pre-preg materials during the curing process. In addition, the conductive materil 54 can be incorporated in to a glass or carbon veil or a dry fabric. As used herein, pre-preg materials refer generally to "pre-impregnated" composite fibers where a matrix material is already present. The composite fibers often take the form of a weave and the matrix is used to bond the fibers together and to other components during manufacture. The matrix is only partially cured to allow easy handling, therefore, the conductive material 54 may be inserted into the matrix before it is cured such that the spar cap 20 may be cured as one part, with the conductive material 54 cured therein.

The present disclosure is also directed to methods for manufacturing spar caps as described herein. For example, in one embodiment, the method may include providing one or more layers of a first material, e.g. glass, carbon, or pre-preg fiber laminate composites. Thus, the method may also include placing a second conductive material adjacent to or within at least one of the layers of the first material. For example, in one embodiment, the method may include alternating the conductive material between one or more of the layers of first material. Alternatively, in embodiments containing pre-preg composite fibers, the method may include embedding the conductive material within the pre-preg composite fibers before the spar cap is cured. Thus, the methods described herein provide a spar cap containing conductive material configured therein that equipotentially connects all of the layers of the spar cap such that the spar cap can be electrically connected to a lightning protection system of the wind turbine.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art.

## Claims

1. A rotor blade (16) of a wind turbine (10), the rotor blade (16) comprising:
a blade root (30) and a blade tip (32);
a leading edge (26) and a trailing edge (28);
a suction side (36) and a pressure side (34); and
at least one spar cap (20) configured on an internal surface of either or both of the pressure or suction sides (34, 36), **characterized in that** the spar cap (20) is constructed from a plurality of layers of a first composite material (52) and a plurality of layers of a second conductive material (54) contacting the layers of first composite material (52), the conductive material (54) being a different material than the first composite material (52),
wherein the conductive material (54) is configured with the first composite material (52) so as to create an equipotential spar cap (20), and
wherein the spar cap (20) further comprises alternating layers of the first composite material (52) and the conductive material (54).

2. The rotor blade (16) of claim 1, wherein the conductive material (54) of the spar cap (20) is configured to electrically connect to a lightning protection system (50) of the wind turbine (10).

3. The rotor blade (16) of any preceding claim, wherein the conductive material (54) is embedded within one or more of the layers of the first composite material (52).

4. The rotor blade (16) of any preceding claim, wherein the conductive material (54) comprises at least one metal or metal alloy.

5. The rotor blade (16) of claim 4, wherein the metal comprises at least one of copper, aluminum, steel, tin, tungsten, iron, nickel, or combinations thereof.

6. The rotor blade (16) of any preceding claim, wherein the conductive material (54) comprises at least one of the following configurations: a mesh, a wire, or a ply.

7. The rotor blade (16) of any preceding claim, wherein the layers of first composite material (52) comprise at least one of glass fiber laminate composites, carbon fiber laminate composites, or pre-preg fiber composites.

8. The rotor blade (16) of any preceding claim, wherein the layers of the first composite material (52) and the conductive material (54) comprise varying lengths along a length (58) of the spar cap (20).

9. The rotor blade (16) of any preceding claim, wherein the layers of the first composite material (52) and the conductive material (54) comprise uniform lengths along a spar width (56).

10. A wind turbine (10), comprising:
a tower (12) mounted on a support surface;
a nacelle (14) configured atop the tower (12);
a rotor hub (18) comprising one or more rotor blades (16) as defined in any preceding claim.

11. A method of manufacturing a spar cap (20) for a rotor blade (16) of a wind turbine (10), the method comprising:
providing a plurality of layers of a first composite material (52) of the spar cap (20); and
**characterized by**:
placing a plurality of layers of conductive material (54) adjacent to or within the layers of the first composite material (52), the conductive material (54) being different than the first composite material (52),
wherein the conductive material (54) is configured with the first composite material (52) so as to create an equipotential spar cap (20), and
wherein placing the plurality of layers of conductive material (54) adjacent to the layers of first composite material (52) further comprises at least one of alternating the conductive material (54) with the layers of first composite material (52) or embedding the conductive material (54) within pre-preg fiber composites.

12. The method of claim 11, wherein the layers of first composite material (52) comprise at least one of glass fiber laminate composites, carbon fiber laminate composites, or pre-preg fiber composites.

13. The method of claim 11 or 12, wherein the conductive material (54) comprises at least one metal or metal alloy.

## Patentansprüche

1. Ein Rotorblatt (16) einer Windturbine (10), wobei das Rotorblatt (16) folgendes umfasst:
einen Blattwurzel (30) und eine Blattspitze (32);
eine Vorderkante (26) und eine Hinterkante (28);
eine Ansaugseite (36) und eine Druckseite (34); und
mindestens einen Gurt (20), der auf einer Innenfläche von einer oder beiden von der Druckseite oder der Ansaugseite (34, 36) konfiguriert ist, **dadurch gekennzeichnet, dass** der Gurt (20) aus einer Vielzahl von Schichten aus einem ersten Verbundwerkstoff (52) und einer Vielzahl von Schichten aus einem zweiten leitenden Material (54), welche in Kontakt mit den Schichten aus dem ersten Verbundwerkstoff (52) sind, hergestellt ist, wobei das leitende Material (54) ein von dem ersten Verbundwerkstoff (52) verschiedenes Material ist,
wobei das leitende Material (54) mit dem ersten Verbundwerkstoff (52) konfiguriert ist, um einen äquipotenzialen Gurt (20) zu erzeugen, und
wobei der Gurt (20) ferner alternierende Schichten des ersten Verbundwerkstoffs (52) und des leitenden Materials (54) umfasst.

2. Das Rotorblatt (16) des Anspruchs 1, wobei das leitende Material (54) des Gurtes (20) konfiguriert ist, um mit einem Blitzschutzsystem (50) der Windturbine (10) elektrisch verbunden zu werden.

3. Das Rotorblatt (16) von einem der vorhergehenden Ansprüche, wobei das leitende Material (54) in einer oder mehreren von den Schichten des ersten Verbundwerkstoffs (52) eingebettet ist.

4. Das Rotorblatt (16) von einem der vorhergehenden Ansprüche, wobei das leitende Material (54) mindestens ein Metall oder eine Metalllegierung umfasst.

5. Das Rotorblatt (16) des Anspruchs 4, wobei das Metall mindestens eines von Kupfer, Aluminium, Stahl, Zinn, Wolfram, Eisen, Nickel, oder Kombinationen davon umfasst.

6. Das Rotorblatt (16) von einem der vorhergehenden Ansprüche, wobei das leitende Material (54) mindestens eine von den folgenden Konfigurationen umfasst: eine Masche, ein Draht oder eine Lage.

7. Das Rotorblatt (16) von einem der vorhergehenden Ansprüche, wobei die Schichten des ersten Verbundwerkstoffs (52) mindestens einen von den folgenden umfasst: Verbundwerkstoffe aus Glasfaserlaminat, Verbundwerkstoffe aus Kohlefaserlaminat, oder Verbundwerkstoffe aus Prepregfaser.

8. Das Rotorblatt (16) von einem der vorhergehenden Ansprüche, wobei die Schichten von dem ersten Verbundwerkstoff (52) und dem leitenden Material (54) verschiedene Längen entlang einer Länge (58) des Gurtes (20) umfassen.

9. Das Rotorblatt (16) von einem der vorhergehenden Ansprüche, wobei die Schichten von dem ersten Verbundwerkstoff (52) und dem leitenden Material (54) gleichmäßige Längen entlang einer Holmbreite (56) umfassen.

10. Eine Windturbine (10) umfassend:
einen auf einer Tragestruktur montierten Turm (12);
eine auf dem Turm (12) konfigurierte Gondel (14);
eine Rotornabe (18) umfassend ein oder mehrere Rotorblätter (16) wie in einem der vorhergehenden Ansprüche definiert.

11. Ein Verfahren zur Herstellung von einem Gurt (20) für ein Rotorblatt (16) von einer Windturbine (10), wobei das Verfahren folgendes umfasst:
das Bereitstellen von einer Vielzahl von Schichten von einem ersten Verbundwerkstoff (52) des Gurtes (20); und
**dadurch gekennzeichnet, dass**
eine Vielzahl von Schichten von leidendem Material (54) angrenzend an die Schichten des ersten Verbundwerkstoffs (52) oder innerhalb dieser angeordnet wird, wobei das leitende Material (54) verschieden von dem ersten Verbundwerkstoff (52) ist,
wobei das leitende Material (54) mit dem ersten Verbundwerkstoff (52) konfiguriert ist, um einen äquipotenzialen Gurt (20) zu erzeugen, und
wobei das Anordnen von der Vielzahl von Schichten leitenden Materials (54) angrenzend an die Schichten des ersten Verbundwerkstoffs (52) ferner mindestens eines von den folgenden umfasst: das Alternieren des leitenden Materials (54) mit den Schichten des ersten Verbundwerkstoffs (52) oder das Einbetten des leitenden Materials (54) innerhalb Verbundwerkstoffe aus Prepregfaser.

12. Das Verfahren des Anspruchs 11, wobei die Schichten des ersten Verbundwerkstoffs (52) mindestens einen von den folgenden umfasst: Verbundwerkstoffe aus Glasfaserlaminat, Verbundwerkstoffe aus Kohlefaserlaminat, oder Verbundwerkstoffe aus Prepregfaser.

13. Das Verfahren des Anspruchs 11 oder 12, wobei das leitende Material (54) mindestens ein Metall oder eine Metalllegierung umfasst.

## Revendications

1. Une pale de rotor (16) d'une éolienne (10), la pale de rotor (16) comprenant :
une pale de rotor (30) et une pointe de pale (32) ;
un bord d'attaque (26) et un bord de fuite (28) ;
un côté aspiration (36) et un côté pression (34) ; et
au moins un capuchon de longeron (20) configuré sur une surface intérieure d'un quelconque du côté pression ou du côté aspiration (34, 36), ou de tous deux, **caractérisée en ce que** le capuchon de longeron (20) est construit à partir d'une pluralité de couches d'un premier matériau composite (52) et une pluralité de couches d'un second matériau conducteur (54) en contact avec les couches du premier matériau composite (52), le matériau conducteur (54) étant un matériau différent du premier matériau composite (52),
dans laquelle le matériau conducteur (54) est configuré avec le premier matériau composite (52) de manière à créer un capuchon de longeron (20) équipotentiel, et
dans laquelle le capuchon de longeron (20) comprend en outre des couches alternées du premier matériau composite (52) et du matériau conducteur (54).

2. La pale de rotor (16) de la revendication 1, dans laquelle le matériau conducteur (54) du capuchon de longeron (20) est configuré pour être électriquement relié à un système de protection contre la foudre (50) de l'éolienne (10).

3. La pale de rotor (16) de l'une quelconque des revendications précédentes, dans laquelle le matériau conducteur (54) est intégré dans une ou plus des couches du premier matériau composite (52).

4. La pale de rotor (16) de l'une quelconque des revendications précédentes, dans laquelle le matériau conducteur (54) comprend au moins un métal ou un alliage de métaux.

5. La pale de rotor (16) de la revendication 4, dans laquelle le métal comprend au moins un des métaux suivants : cuivre, aluminium, acier, étain, tungstène, fer, nickel, ou des combinaisons de ceux-ci.

6. La pale de rotor (16) de l'une quelconque des revendications précédentes, dans laquelle le matériau conducteur (54) comprend au moins une des configurations suivantes : une maille, un fil ou un pli.

7. La pale de rotor (16) de l'une quelconque des revendications précédentes, dans laquelle les couches du premier matériau composite (52) comprennent au moins un des suivants : des matériaux composites laminés en fibre de verre, des matériaux composites laminés en fibre de carbone, ou des matériaux composites en fibres préimprégnées.

8. La pale de rotor (16) de l'une quelconque des revendications précédentes, dans laquelle les couches du premier matériau composite (52) et du matériau conducteur (54) comprennent des longueurs variables le long d'une longueur (58) du capuchon de longeron (20).

9. La pale de rotor (16) de l'une quelconque des revendications précédentes, dans laquelle les couches du premier matériau composite (52) et du matériau conducteur (54) comprennent des longueurs uniformes le long d'une largeur de longeron (56).

10. Une éolienne (10) comprenant :
une tour (12) montée sur une surface de support ;
une nacelle (14) configurée au-dessus de la tour (12) ;
un moyeu de rotor (18) comprenant une ou plusieurs pales de rotor (16) telles que définies dans l'une quelconque des revendications précédentes.

11. Un procédé de fabrication d'un capuchon de longeron (20) pour une pale de rotor (16) d'une éolienne (10), le procédé comprenant :
fournir une pluralité de couches d'un premier matériau composite (52) du capuchon de longeron (20) ; et
**caractérisé en ce que** :
une pluralité de couches de matériau conducteur (54) est située en position adjacente à ou dans l'intérieur des couches du premier matériau composite (52), le matériau conducteur (54) étant différent du premier matériau composite (52),
dans lequel le matériau conducteur (54) est configuré avec le premier matériau composite (52) de manière à créer un capuchon de longeron (20) équipotentiel, et
dans lequel situer la pluralité de couches de matériau conducteur (54) en position adjacente aux couches du premier matériau composite (52) comprend en outre au moins un parmi alterner le matériau conducteur (54) avec les couches du premier matériau composite (52) ou intégrer le matériau conducteur (54) dans des matériaux composites en fibres préimprégnées.

12. Le procédé de la revendication 11, dans lequel les couches du premier matériau composite (52) comprennent au moins un des suivants : des matériaux composites laminés en fibre de verre, des matériaux composites laminés en fibre de carbone, ou des matériaux composites en fibres préimprégnées.

13. Le procédé de la revendication 11 ou 12, dans lequel le matériau conducteur (54) comprend au moins un métal ou un alliage de métaux.
